# EUROPÄISCHE PATENTANMELDUNG

(11) **EP 4 053 712 A1**
(43) Veröffentlichungstag der Anmeldung: **07.09.2022**
(21) Anmeldenummer: 21160134.9
(22) Anmeldetag: 02.03.2021
(51) Int. Cl.: G06F 16/25, G06F 16/27, G06F 16/2458, H04L 12/18, H04L 29/08

(54) **VERFAHREN ZUR ÜBERTRAGUNG VON PUBLISH-SUBSCRIBE-NACHRICHTEN, NETZWERK UND ANLAGE**

(71) Anmelder: Siemens Aktiengesellschaft, 80333 München (DE)
(72) Erfinder: Mößbauer, Felix, 85570 Markt Schwaben (DE); Sedlacek, Matous, 84034 Landshut (DE); Strobel, Holger, 90556 Steinbach (DE)

(57) **Zusammenfassung**

Bei dem Verfahren zur brokerlosen Übertragung von Publish-Subscribe-Nachrichten zwischen mindestens zwei Subnetzen werden die Publish-Subscribe-Nachrichten mittels einer Abstraktionsschicht mit einer verteilten Datenbank übertragen, wobei die verteilte Datenbank zum einen zwischen mindestens einer Datenquelle und mindestens einer Datensenke vermittelt und wobei die verteilte Datenbank von einer Datenverbindung der mindestens zwei Subnetze miteinander abstrahiert.

Das Netzwerk mit mindestens zwei Subnetzen ist zu einer solchen brokerlosen Übertragung von Publish-Subscribe-Nachrichten zwischen den mindestens zwei Subnetzen ausgebildet und eingerichtet ist. Das Netzwerk weist eine Abstraktionsschicht mit einer verteilten Datenbank auf, wobei die verteilte Datenbank zum Vermitteln zwischen mindestens einer Datenquelle und mindestens einer Datensenke ausgebildet ist und wobei die Abstraktionsschicht von einer Datenverbindung der mindestens zwei Subnetze miteinander abstrahiert.

Die Anlage ist insbesondere eine Fertigungsanlage und weist ein solches Netzwerk auf.

## Beschreibung

Die Erfindung betrifft ein Verfahren zur brokerlosen Übertragung von Publish-Subscribe-Nachrichten zwischen mindestens zwei Subnetzen, ein Netzwerk und eine Anlage.

Die weiteren Entwicklungen des Industrial Internet of Things (IIoT) in der digitalen Industrie erfordert in naher Zukunft Lösungen, die eine beliebig große Anzahl an vernetzten Geräten unterstützen können. Eine hierarchische Automatisierungspyramide geht künftig über in ein verteiltes und heterogenes Netz. Grund dafür sind neue nicht-funktionale Anforderungen an Kommunikationskanäle von Geräten und Maschinen, insbesondere Anforderungen an Performanz, Skalierbarkeit, Einfachheit der Integration, geringer Latenz, und Reichweite über Subnetzgrenzen hinweg.

Die heute etablierten und verkauften Kommunikationstechnologien sind allerdings geräteorientiert und verwenden Client-Server-Kommunikation oder Protokollstapel, die bisherige Anforderungen ausreichend erfüllt haben und über die Jahre gewachsen sind, etwa OPC, OPC-UA, das S7-Protokoll, etc.

Bei den oben genannten neuen Anforderungen stoßen die etablierten Technologien allerdings an Ihre Grenzen.

Es ist bekannt, Nachrichten nicht von zentral festgelegten Sendern zu zentral festgelegten Empfängern zu übertragen, sondern Kommunikation mittels Publish-Subscribe-Nachrichten zu realisieren: Mittels Publish-Subscribe-Nachrichten fungieren Absender von Nachrichten als Herausgeber, die Nachrichten nicht direkt an bestimmte Empfänger senden, sondern sie teilen Nachrichten stattdessen in Klassen, sogenannte Topics, ein, die von Abonnenten dieser Topics gelesen werden können. Grundsätzlich müssen die Herausgeber der Nachrichten also nicht notwendig wissen, welche Abonnenten möglicherweise vorhanden sind. Entsprechend können Abonnenten, auch als Subscriber bezeichnet, eine oder mehrere Klassen auswählen und nur Nachrichten für diese ausgewählten Klassen empfangen. Die Empfänger müssen dazu nicht notwendigerweise wissen, von welchen Herausgebern die Informationen dieser Klassen im Einzelnen stammen.

In diesem Zusammenhang bleibt es eine Herausforderung, Multicastkommunikation über Subnetzgrenzen hinweg ohne zentralen Broker zu realisieren, da ein etwa mittels des User-Datagram-Protokolls UDP (engl.: "User Datagram Protocol") realisierter Multicast nur innerhalb eines Subnetzes zur Verfügung steht. Zwar kann grundsätzlich ein Broker verwendet werden. Allerdings würden dann wesentliche Vorteile einer brokerlosen Infrastruktur, insbesondere der Verzicht auf einen Single-Pointof-Failure, auf eine minimale Latenz sowie eine konfigurationslose Verbindung, entfallen.

Brokerlose Multicastkommunikation ist aber essenziell für die Entwicklung künftiger dezentraler IIoT-Systeme.

Es ist daher eine Aufgabe der Erfindung, ein verbessertes Verfahren zur brokerlosen Übertragung von Publish-Subscribe-Nachrichten zwischen mindestens zwei Subnetzen bereitzustellen. Zudem ist es eine Aufgabe der Erfindung, ein Netzwerk bereitzustellen, in welchem ein solches Verfahren ausgeführt werden kann. Ferner ist es eine Aufgabe der Erfindung, eine verbesserte Anlage, insbesondere eine Fertigungsanlange, zu schaffen.

Diese Aufgaben der Erfindung werden mit einem Verfahren mit den in Anspruch 1 angegebenen Merkmalen sowie mit einem Netzwerk mit den in Anspruch 9 angegebenen Merkmalen sowie mit einer Anlage mit den in Anspruch 13 angegebenen Merkmalen gelöst. Bevorzugte Weiterbildungen der Erfindung sind in den zugehörigen Unteransprüchen, der nachfolgenden Beschreibung und der Zeichnung angegeben.

Bei dem Verfahren zur brokerlosen Übertragung von Publish-Subscribe-Nachrichten zwischen mindestens zwei Subnetzen werden die Publish-Subscribe-Nachrichten mittels einer Abstraktionsschicht mit einer verteilten Datenbank übertragen, wobei die verteilte Datenbank zum einen zwischen mindestens einer Datenquelle und mindestens einer Datensenke vermittelt und wobei die verteilte Datenbank von einer Datenverbindung der mindestens zwei Subnetze miteinander abstrahiert.

Auf diese Weise können Publish-Subscribe-Nachrichten auch zwischen Subnetzen übertragen werden. Mittels der Abstraktionsschicht mit der verteilten Datenbank können die Publish-Subscribe-Nachrichten zwischen logischen Entitäten übertragen werden, welche von unterliegenden physikalischen Systemgrenzen nicht betroffen sind. Eine Datenverbindung zwischen den Subnetzen bildet bei der verteilten Datenbank infolge der Abstraktion von hardwarenahen Gegebenheiten kein grundsätzliches Hindernis beim Austausch von Publish-Subscribe-Nachrichten über die Systemgrenzen hinweg. Vorteilhaft können mittels des erfindungsgemäßen Verfahrens also auf einfach zu konfigurierende und administrierende Weise Publish-Subscribe-Nachrichten brokerlos zwischen Subnetzen übertragen werden. Broker-Cluster lassen sich mittels des erfindungsgemäßen Verfahrens folglich vermeiden und Latenzen sind erfindungsgemäß vermeidbar, da zusätzliche Kommunikationswege zusätzlich zur Datenverbindung zwischen den Subnetzen nicht erforderlich sind. Da zusätzliche Kommunikationswege zwischen den Subnetzen erfindungsgemäß nicht eingerichtet werden müssen, lässt sich das erfindungsgemäße Verfahren einfach und effizient, insbesondere ohne erhöhten Konfigurationsaufwand einsetzen. Vorteilhaft lässt sich das erfindungsgemäße Verfahren mit dieser einfachen Konfigurierbarkeit insbesondere in Industrienetzwerken mit einer hohen Anzahl miteinander verbundener Geräte einsetzen, etwa in Industrienetzwerken von Fertigungsanlagen wie digitalen Fabriken.

Bei dem Verfahren gemäß der Erfindung genügt die Abstraktionsschicht bevorzugt dem Data-Distribution-Service-Standard. Der Data-Distribution-Service-Standard realisiert vorteilhafterweise eine erfindungsgemäß vorgesehene verteilte Datenbank mit einer Vermittlung von Nachrichten zwischen logischen Entitäten, wobei der Data-Distribution-Service-Standard von der Datenverbindung zwischen Subnetzen abstrahieren kann. Vorteilhaft kann also bei dem erfindungsgemäßen Verfahren mit dem Data-Distribution-Standard ein etablierter und verbreiteter Standard herangezogen werden und zur Übertragung von Publish-Subscribe-Nachrichten genutzt werden. Vorzugsweise wird zur Nutzung des Data-Distribution-Standards ein publish-subscribe-fähiges Transportprotokoll herangezogen, dessen Implementierung um den Data-Distribution-Standard erweitert ist. Infolge der Erweiterung der Implementierung des publish-subscribe-fähigen Transportprotokolls werden einerseits die Fähigkeit zum Übertragen von Publish-Subscribe-Nachrichten des Transportprotokolls genutzt und zugleich werden die Möglichkeiten des Data-Distribution-Standards zugänglich, insbesondere die Möglichkeit zur Node-Discovery, d. h. zum automatischen konfigurieren von physikalischen Gerätschaften, zwischen welchen Publish-Subscribe-Nachrichten ausgetauscht werden sollen. Vorteilhaft können in dieser Weiterbildung der Erfindung Plug-and-Run-Konzepte leicht umgesetzt werden. Weiterhin vorteilhaft bietet der Data-Distribution-Standard in an sich bekannter Weise eine Vielzahl von Quality-of-Service-Optionen zur Steuerung des Datenflusses, etwa inhaltsbasierte Filterung oder zeitbasierte Filterung oder verlässliche Kommunikation.

Alternativ oder zusätzlich und ebenfalls bevorzugt ist bei dem erfindungsgemäßen Verfahren bei die Datenverbindung mittels eines Routers implementiert. Vorteilhaft bildet ein solcher Router bei dem erfindungsgemäßen Verfahren infolge der verteilten Datenbank und der Abstraktion von der physikalischen Datenverbindung mittels des Routers kein grundsätzliches Problem zum Austausch von Publish-Subscribe-Nachrichten. Bei einer vorteilhaften Weiterbildung des erfindungsgemäßen Verfahrens werden die Publish-Subscribe-Nachrichten mittels Multicast-Nachrichten zwischen den Subnetzen übertragen.

Bei dem Verfahren gemäß der Erfindung werden die Publish-Subscribe-Nachrichten vorzugsweise mittels eines InternetProtokolls, insbesondere mittels des Group-Management-Protokolls, übertragen. Vorteilhaft können Implementierungen des Data-Distribution-Standards Datenverbindungen zwischen Subnetzen wie insbesondere Router zur Übertragung von Daten nach dem Group-Management-Protokoll konfigurieren.

In einer vorteilhaften Weiterbildung des Verfahrens gemäß der Erfindung bildet die Abstraktionsschicht eine Middleware. Insbesondere Implementierungen des Data-Distribution-Standards bilden eine etablierte und verbreitete Middleware, die bevorzugt bei der Ausführung des erfindungsgemäßen Verfahrens heranziehbar ist.

Vorzugsweise weist bei dem erfindungsgemäßen Verfahren ein erstes der mindestens zwei Subnetze mindestens eine Datenbereitstellungskomponente auf und ein zweites der mindestens zwei Subnetze weist mindestens eine Datenkonsumkomponente auf, wobei die mindestens eine Datenquelle je einer der mindestens einen Datenbereitstellungskomponente zugeordnet ist und/oder die mindestens eine Datensenke je einer der mindestens einen Datenkonsumkomponente zugeordnet ist. Auf diese Weise werden die logischen Entitäten, die mindestens eine Datenquelle und die mindestens eine Datensenke jeweils einer physikalischen Komponente, nämlich der mindestens einen Datenbereitstellungskomponente und der mindestens einen Datenkonsumkomponente zugeordnet. Bevorzugt bilden dabei die logischen Entitäten Datenquelle und Datensenke die physikalischen Komponenten Datenbereitstellungskomponente und Datenkonsumkomponente ab.

Zweckmäßig vermittelt bei dem erfindungsgemäßen Verfahren die verteilte Datenbank zwischen mindestens zwei Datenquellen und/oder mindestens zwei Datensenken. In dieser Weiterbildung können Publish-Subscribe-Nachrichten ihre Vorteile deutlich gegenüber einfachen Punkt-zu-Punkt- oder Punkt-zu-Gruppe- oder Gruppe-zu-Punkt-Nachrichten ausspielen, da in dieser Weiterbildung flexible Zuordnungen von Datenquellen und Datensenken möglich sind.

Geeigneterweise ist bei dem Verfahren gemäß der Erfindung die mindestens eine Datenbereitstellungskomponente auf die mindestens eine Datenquelle abgebildet und/oder die mindestens eine Datenkonsumkomponente auf die mindestens eine Datensenke abgebildet. Vorzugsweise werden die Datenbereitstellungskomponente derart zugeordnet, dass jeweils eine, vorzugsweise jede, physikalische Datenkonsumkomponente mit je einer logischen Datensenke identifiziert werden kann und jeweils eine, vorzugsweise jede, Datenbereitstellungskomponente mit je einer Datenquelle identifiziert werden kann. Bevorzugt bilden dabei die logischen Entitäten Datenquelle und Datensenke die physikalischen Komponenten Datenbereitstellungskomponente und Datenkonsumkomponente eindeutig ab.

Das erfindungsgemäße Netzwerk weist mindestens zwei Subnetze auf und ist zur brokerlosen Übertragung von Publish-Subscribe-Nachrichten zwischen den mindestens zwei Subnetzen mittels eines erfindungsgemäßen Verfahrens wie vorhergehend beschrieben ausgebildet und eingerichtet. Das erfindungsgemäße Netzwerk weist eine Abstraktionsschicht mit einer verteilten Datenbank auf, wobei die verteilte Datenbank zum Vermitteln zwischen mindestens einer Datenquelle und mindestens einer Datensenke ausgebildet ist und wobei die Abstraktionsschicht von einer Datenverbindung der mindestens zwei Subnetze miteinander abstrahiert.

Vorzugsweise ist das Netzwerk gemäß der Erfindung ein Internet-der-Dinge-Netzwerk. Gerade in Internet-der-Dinge-Netzwerken, auch als Internet-of-Things-Netzwerke oder Industrie-4.0-Netzwerke bezeichnet, sind regelmäßig eine Vielzahl von Geräten in Produktivumgebungen miteinander verbunden. In solchen industriellen Netzwerken ist eine einfache und schnelle Änderbarkeit und Erweiterbarkeit essenziell und mittels des erfindungsgemäßen Verfahrens bei dem erfindungsgemäßen Netzwerk einfach realisierbar.

Zweckmäßig weist das erfindungsgemäße Netzwerk mindestens eine Datenkonsumkomponente und mindestes eine Datenbereitstellungskomponente, vorzugsweise in, d. h. angebunden an, jeweils unterschiedlichen der mindestens zwei Subnetze, auf. Datenbereitstellungskomponenten sind insbesondere Sensoren und Datenerfassungseinrichtungen in, vorzugsweise industriell ausgerichteten, Netzwerken. Datenkonsumkomponenten sind insbesondere Steuer-, Regel- und/oder Auswerteeinrichtungen in solchen Netzwerken.

Bei dem Netzwerk gemäß der Erfindung bildet/bilden vorzugsweise die mindestens eine Datenkonsumkomponente und/oder die mindestens eine Datenbereitstellungskomponente mindestens ein Feldgerät.

Die erfindungsgemäße Anlage ist insbesondere eine Fertigungsanlage und weist ein erfindungsgemäßes Netzwerk wie oben beschrieben auf. Gerade in Anlagen wie insbesondere Fertigungsanlagen, etwa einer digitalen Fabrik, lassen sich die Vorteile des erfindungsgemäßen Verfahrens und des erfindungsgemäßen Netzwerks mit der leichten Konfigurierbarkeit vorteilhaft einsetzten. Vorteilhaft sind in solchen Anlagen Änderungen des Anlagenbetriebs oder des Anlagenprozesses sowie Erweiterungen des Netzwerks und somit der erfindungsgemäßen Anlage besonders flexibel und einfach möglich. Die erfindungsgemäße Anlage erlaubt also vorteilhaft eine flexible Reaktionen auf Kundenanforderungen und ermöglicht eine Steigerung des Durchsatzes sowie eine verbesserte Skalierbarkeit und Performanz.

Nachfolgend wird die Erfindung anhand in der Zeichnung dargestellter Ausführungsbeispiele näher erläutert.

Die einzige Zeichnungsfigur 1 zeigt ein erfindungsgemäßes Netzwerk einer erfindungsgemäßen Anlage zur Ausführung des erfindungsgemäßen Verfahrens zur brokerlosen Übertragung zwischen mindestens zwei Subnetzen schematisch in einer Prinzipskizze.

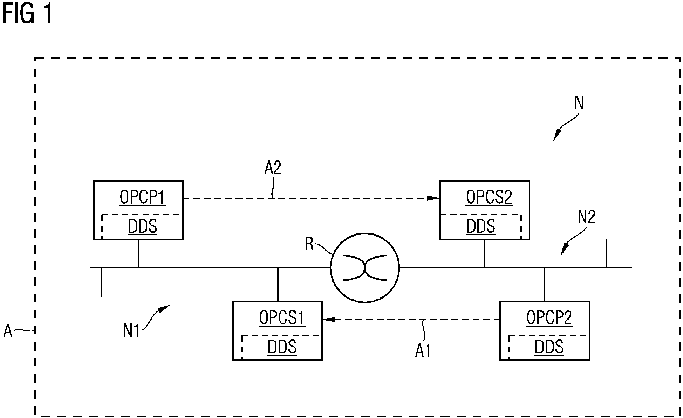

Mittels des in Fig. 1 dargestellten Netzwerks N wird das erfindungsgemäße Verfahren wie nachfolgend beschrieben ausgeführt:
Das Netzwerk N ist im dargestellten Ausführungsbeispiel ein Internet-der-Dinge-Netzwerk in Gestalt eines Sensor- und Steuernetzwerks. Das Sensor- und Steuernetzwerk ist im gezeigten Ausführungsbeispiel Teil einer erfindungsgemäßen Fertigungsanlage A, in welcher Maschinen (nicht eigens dargestellt) jeweils mittels eines Werkzeugs, beispielsweise eines nicht eigens dargestellten Fräs- oder Bohrwerkzeugs, Metallteile bearbeiten.

Das Sensornetzwerk setzt sich aus zwei Subnetzen, einem ersten Subnetz N1 und einem zweiten Subnetz N2, zusammen. Die beiden Subnetze N1 und N2 sind mittels eines Routers R, der Daten zwischen den Subnetzen N1 und N2 überträgt, miteinander verbunden. Die Subnetze N1 und N2 bilden jeweils eine Domäne des Sensornetzwerks. Eine erste Domäne des Sensornetzwerks mit dem ersten Subnetz N1 ist Teil eines Maschinenbetriebsmanagements der Fertigungsanlage. Das zweite Subnetz N2 bildet eine zweite Domäne des Sensornetzwerks, welche das Betriebsmittelmanagement der Fertigungsanlage betrifft.

Das erste Subnetz N1 umfasst eine Maschinensteuerungseinheit OPCS1 und einen Temperatursensor OPCP1. Der Temperatursensor OPCP1 ist an einem Werkzeughalter zur Halterung des Werkzeugs der Maschine angeordnet und erfasst in Zeitabständen von 500 Millisekunden eine Temperatur des Werkzeugs. Mittels des Subnetzes N1 ist der Temperatursensor OPCP1 drahtlos an die Maschinensteuerungseinheit OPCS1 angebunden. Die Maschinensteuerungseinheit OPCS1 fragt regelmäßig Temperaturdaten des Temperatursensors OPCP1 ab.

Das zweite Subnetz N2 umfasst ein Planungsmodul OPCS2 zur Planung eines Betriebsmittelflusses. Dazu werden mittels eines optischen Sensors in Form einer Kameraeinrichtung OPCP2 Bilder des Werkzeugs der Maschine erfasst. Die Kameraeinrichtung OPCP2 erfasst die Bilder und ermittelt anhand einer Bilderkennungssoftware einen Grad eines Verschleißes des Werkzeugs und speist den Grad des Verschleißes in das Subnetz N2. Das Planungsmodul OPCS2 fragt den Grad des Verschleißes regelmäßig, d. h. in Zeitabständen von 5 Minuten ab und ermittelt einen kostenoptimierten Zeitpunkt zum Austausch des Werkzeugs.

Zur Erhöhung der Vorhersagequalität zur Ermittlung des besten Austausches des Werkzeugs fragt das Planungsmodul OPCS2 zusätzlich zu dem optisch erkannten Grad des Verschleißes die Temperaturdaten des Temperatursensors OPCP1 ab. Ferner ist es in bestimmten Fällen vorteilhaft, wenn auch die Maschinensteuerungseinheit OPCS1 den Grad des Verschleißes von der Kameraeinrichtung OPCP2 erhält. Es sind also Datentransfers A1 von Temperaturdaten des Temperatursensors OPCP1 zum Planungsmodul OPCS2 sowie Datentransfers A2 von der Kameraeinrichtung OPCP2 zur Maschinensteuerungseinheit OPCS1 vorgesehen. Die Datentransfers A1, A2 führen von Subnetz N1 zu Subnetz N2 und umgekehrt.

Die Datentransfers A1, A2 sind dabei nicht als Unicast-Nachrichten realisiert, sondern als Transfers von Abonnementdaten mittels eines Publish-Subscribe-Protokolls: Die Maschinensteuerungseinheit OPCS1 abonniert Abonnementdaten zum Topic *"Werkzeugtemperatur",* die der Temperatursensor OPCP1 bereitstellt und sowie Abonnementdaten zum Topic *"Werkzeugbild"* der Kameraeinrichtung OPCP2. Ferner abonniert auch das Planungsmodul OPCS2 Abonnementdaten zum Topic *"Werkzeugtempera*tur" des Temperatursensors OPCP1 und Abonnementdaten zum Topic *"Werkzeugbild"* der Kameraeinrichtung OPCP2. Ferner haben Planungsmodul OPCS2 und Maschinensteuerungseinheit OPCP1 noch viele weitere Topics abonniert, deren Abonnementdaten jeweils zur Maschinensteuerung und zur Planung des Betriebsmittelflusses herangezogen werden.

Das Publish-Subscribe-Protokoll ist im dargestellten Ausführungsbeispiel nicht als brokervermitteltes Publish-Subscribe-Protokoll umgesetzt, sondern als brokerloses Publish-Subscribe-Protokoll. Auf diese Weise wird ein Single-Pointof-Failure vermieden und somit die Ausfallsicherheit der Fertigungsanlage erhöht.

Das Publish-Subscribe-Protokoll basiert auf einer verteilten Datenbank, die über mehrere, im dargestellten Ausführungsbeispiel sämtliche - Komponenten der Subnetze N1, N2 verteilt aufgebaut ist. Auf diese Weise können Daten redundant und ausfallsicher bereitgehalten und übermittelt werden.

Im Netzwerk N fungieren der Temperatursensor OPCP1 und die Kameraeinrichtung OPCP2 als Datenbereitstellungskomponenten, die Abonnementdaten bereitstellen. Maschinensteuereinrichtung OPCS1 und Planungsmodul OPCS2 bilden Datenkonsumkomponenten des Netzwerks, welche Abonnementdaten abfragen, d. h. konsumieren. Diese physikalischen Datenbereitstellungskomponenten werden mittels einer Schnittstelle an die verteilte Datenbank angebunden und speisen ihre jeweils bereitgestellten Daten in eine logische Repräsentation der Datenbereitstellungskomponente in Form einer Datenquelle ein. Die Datenkonsumkomponenten entnehmen ihre angeforderten Daten mittels einer Schnittstelle aus der Datenbank und sind in der verteilten Datenbank als Datensenke repräsentiert. Das Publish-Subscribe-Protokoll verknüpft nun logisch die Datenquellen mit den Datensenken und übernimmt den Austausch zwischen Datenquellen und Datensenken mittels des Publish-Subscribe-Protokolls.

Infolge der digitalen Repräsentation des Publish-Subscribe-Protokolls mittels einer verteilten Datenbank ist der Datenaustausch von der darunterliegenden physikalischen Hardware der Subnetze N1, N2 abstrahiert und von dieser grundsätzlich unabhängig verwirklicht. Die verteilte Datenbank und das damit realisierte Publish-Subscribe-Protokoll ist mittels einer Middleware DDS realisiert, die dem Data Distribution Service-Standard genügt. Dabei ist im gezeigten Ausführungsbeispiel eine Middleware DDS auf jeder physikalischen Komponente des ersten N1 und des zweiten Subnetzes N2 implementiert, d. h. die Temperatursensoren OPCP1, die Maschinensteuereinrichtung OPCS1, die Kameraeinrichtung OPCP2, das Planungsmodul OPCS2 implementieren jeweils die Middleware DDS und speichern und betreiben als verteiltes System gemeinsam die verteilte Datenbank.

Mittels einer solchen Middleware ist insbesondere der das erste Subnetz N1 mit dem zweiten Subnetz N2 verbindende Router R nicht individuell anzusteuern, sondern die Middleware vermittelt zwischen dem hardwarenahen Datenaustausch mittels des Routers auf der einen und dem Publish-Subscribe-Protokoll und der verteilten Datenbank auf der anderen Seite.

Im gezeigten Ausführungsbeispiel werden die im Transportprotokoll DDS enthaltenen Node-Discovery-Techniken genutzt. Mittels der Node-Discovery-Techniken wird der Router R mittels eines multicastfähigen Internetprotokolls, hier dem Internet-Group-Management-Protokoll IGMP, konfiguriert.

Erfindungsgemäß ist im gezeigten Ausführungsbeispiel die Middleware DDS nicht als isolierte, autarke Software implementiert, sondern die Middleware ist als eine Erweiterung des publish-subscribe-fähigen Unified-Architecture-Standards OPC UA P/S implementiert. Dieser publish-subscribe-fähige Unified-Architecture-Standard ist ein Standard für den Datenaustausch als plattformunabhängige, service-orientierte Architektur. Infolge der Erweiterung um den Data-Distribution-Standard stellt die Middleware DDS ein Transportprotokoll für OPC-UA-P/S-Pakete bereit. Auf diese Weise kann die Middleware DDS mittels des Internet-Group-Management-Protokolls IGMP den Router R konfigurieren, sodass dieser aus einem der Subnetze N1, N2 eingehende Multicast-Pakete in das jeweils andere Subnetz N2, N1 weiterleitet.

Grundsätzlich kann das Netzwerk N in weiteren, nicht eigens dargestellten Ausführungsbeispielen auch weitere Subnetze umfassen, welche weiteren oder anderen Zwecken dienen. Beispielsweise kann das Netzwerk N in weiteren Ausführungsbeispielen ein Sensornetzwerk eines Zuges oder eines Gebäudes sein.

## Patentansprüche

1. Verfahren zur brokerlosen Übertragung von Publish-Subscribe-Nachrichten zwischen mindestens zwei Subnetzen (N1, N2), bei welchem die Publish-Subscribe-Nachrichten mittels einer Abstraktionsschicht (DDS) mit einer verteilten Datenbank übertragen werden, wobei die verteilte Datenbank zum einen zwischen mindestens einer Datenquelle und mindestens einer Datensenke vermittelt und wobei die verteilte Datenbank von einer Datenverbindung (R) der mindestens zwei Subnetze (N1, N2) miteinander abstrahiert.

2. Verfahren nach einem der vorhergehenden Ansprüche, bei welchem die Abstraktionsschicht (DDS) dem Data-Distributed-Service-Standard genügt und/oder bei welchem die Datenverbindung (R) mittels eines Routers implementiert ist.

3. Verfahren nach einem der vorhergehenden Ansprüche, bei welchem Publish-Subscribe-Nachrichten mittels Multicast-Nachrichten zwischen den Subnetzen (N1, N2) übertragen werden, wobei die Publish-Subscribe-Nachrichten vorzugsweise mittels des Transportprotokolls UPC UA P/S übertragen werden.

4. Verfahren nach einem der vorhergehenden Ansprüche, bei welchem die Publish-Subscribe-Nachrichten mittels des Internet-Protokolls, insbesondere mittels des Group Management Protokolls, übertragen werden.

5. Verfahren nach einem der vorhergehenden Ansprüche, bei welchem die Abstraktionsschicht (DDS) eine Middleware bildet.

6. Verfahren nach einem der vorhergehenden Ansprüche, bei welchem ein erstes der mindestens zwei Subnetze (N1, N2) mindestens eine Datenbereitstellungskomponente (OPCP1, OPCP2) aufweist und ein zweites der mindestens zwei Subnetze mindestens eine Datenkonsumkomponente (OPCS1, OPCS2) aufweist, wobei die mindestens eine Datenquelle je einer der mindestens einen Datenbereitstellungskomponente (OPCP1, OPCP2) zugeordnet ist und/oder die mindestens eine Datensenke je einer der mindestens einen Datenkonsumkomponente (OPCS1, OPCS2) zugeordnet ist.

7. Verfahren nach einem der vorhergehenden Ansprüche, bei welchem die verteilte Datenbank zwischen mindestens zwei Datenquellen und/oder mindestens zwei Datensenken vermittelt.

8. Verfahren nach einem der vorhergehenden Ansprüche, bei welchem die mindestens eine Datenbereitstellungskomponente (OPCP1, OPCP2) auf die mindestens eine Datenquelle abgebildet ist und/oder bei welchem die mindestens eine Datenkonsumkomponente (OPCS1, OPCS2) auf die mindestens eine Datensenke abgebildet ist.

9. Netzwerk mit mindestens zwei Subnetzen, welches zur brokerlosen Übertragung von Publish-Subscribe-Nachrichten zwischen den mindestens zwei Subnetzen (N1, N2) mittels eines Verfahrens nach einem der vorhergehenden Ansprüche ausgebildet und eingerichtet ist, aufweisend eine Abstraktionsschicht (DDS) mit einer verteilten Datenbank, wobei die verteilte Datenbank zum Vermitteln zwischen mindestens einer Datenquelle und mindestens einer Datensenke ausgebildet ist und wobei die Abstraktionsschicht von einer Datenverbindung (R) der mindestens zwei Subnetze (N1, N2) miteinander abstrahiert.

10. Netzwerk nach einem der vorhergehenden Ansprüche, welches ein Internet-der-Dinge-Netzwerk (N) ist.

11. Netzwerk nach einem der vorhergehenden Ansprüche, welches mindestens eine Datenkonsumkomponente (OPCS1, OPCS2) und mindestes eine Datenbereitstellungskomponente (OPCP1, OPCP2), vorzugsweise in jeweils unterschiedlichen der mindestens zwei Subnetze (N1, N2) aufweist.

12. Netzwerk nach einem der vorhergehenden Ansprüche, bei welchem die mindestens eine Datenkonsumkomponente (OPCS1, OPCS2) und/oder die mindestens eine Datenbereitstellungskomponente (OPCP1, OPCP2) mindestens ein Feldgerät (OPCP1, OPCP2, OPCS1, OPCS2) bildet.

13. Anlage, insbesondere Fertigungsanlage, aufweisend ein Netzwerk (N) nach einem der vorhergehenden Ansprüche.
